Europäisches Patentamt

European Patent Office

Office européen des brevets

(11) Veröffentlichungsnummer: **0 151 774**
**A2**

# (12) EUROPÄISCHE PATENTANMELDUNG

(21) Anmeldenummer: **84115833.0**

(22) Anmeldetag: **19.12.84**

(51) Int. Cl.⁴: **G 01 F 11/24**

(30) Priorität: **23.12.83 DE 3346898**

(43) Veröffentlichungstag der Anmeldung:
**21.08.85 Patentblatt 85/34**

(84) Benannte Vertragsstaaten:
**AT CH FR GB LI**

(71) Anmelder: **Pfister GmbH**
**Stätzlinger Strasse 70**
**D-8900 Augsburg(DE)**

(72) Erfinder: **Häfner, Hans W.**
**Fichtenweg 15**
**D-8890 Aichach-Walchshofen(DE)**

(74) Vertreter: **Kahler, Kurt, Dipl.-Ing.**
**Raiffeisenstrasse 4**
**D-8931 Walkertshofen(DE)**

(54) Vorrichtung zum kontinuierlichen, gravimetrischen Dosieren und pneumatischen Fördern von schüttfähigem Gut.

(57) Bei der Vorrichtung wird im Abdicht- und Lagerbereich des als Fördereinrichtung verwendeten Rotors in dem dort vorhandenen Schmiermittel ein hydrostatischer Druck aufgebaut, der in einer unter Druck stehenden Schmiermittelzuführeinrichtung erzeugt wird.

Croydon Printing Company Ltd.

EP 0 151 774 A2

Vorrichtung zum kontinuierlichen, gravimetrischen
Dosieren und pneumatischen Fördern von schüttfähigem Gut

---

B e s c h r e i b u n g

Die Erfindung betrifft eine Vorrichtung zum kontinuierlichen, gravimetrischen Dosieren und pneumatischen Fördern
von schüttfähigem Gut gemäß dem Oberbegriff des Patentanspruchs 1.

Eine derartige Vorrichtung ist aus der DE-OS 32 17 406 bekannt. Da zur Abdichtung die Dichtplatten elastisch am
sich drehenden Rotor anliegen, tritt eine verhältnismäßig
hohe Reibung auf. Auch kann trotz der vorhandenen Abdichtungsmaßnahmen das im allgemeinen sehr feinkörnige Gut,
wie Kohlestaub, Zement oder dergleichen, in das Rotorinnere eindringen.

Der Erfindung liegt die Aufgabe zugrunde, bei einer Vorrichtung der gattungsgemäßen Art die Reibung wesentlich
zu verringern.

Diese Aufgabe wird erfindungsgemäß gelöst durch eine Vorrichtung mit den Merkmalen des Kennzeichens des Patentanspruchs 1.

Durch die hydrostatische Lagerung wird der Rotor praktisch
von den Dichtplatten abgehoben, so daß er wesentlich reibungsärmer läuft.

Bevorzugte Weiterbildungen der erfindungsgemäßen Vorrichtung sind in den Unteransprüchen gekennzeichnet. So läßt
sich im Zusammenhang mit der hydrostatischen Lagerung auch
die kardanische Rotorzentrierung und der Mitnahmeschaft der
Antriebswelle automatisch schmieren. Die porösen Dich-

tungen am Übergang zu den Fördertaschen hin verhindern ein Eindringen von zu förderndem Gut in das Rotorinnere.

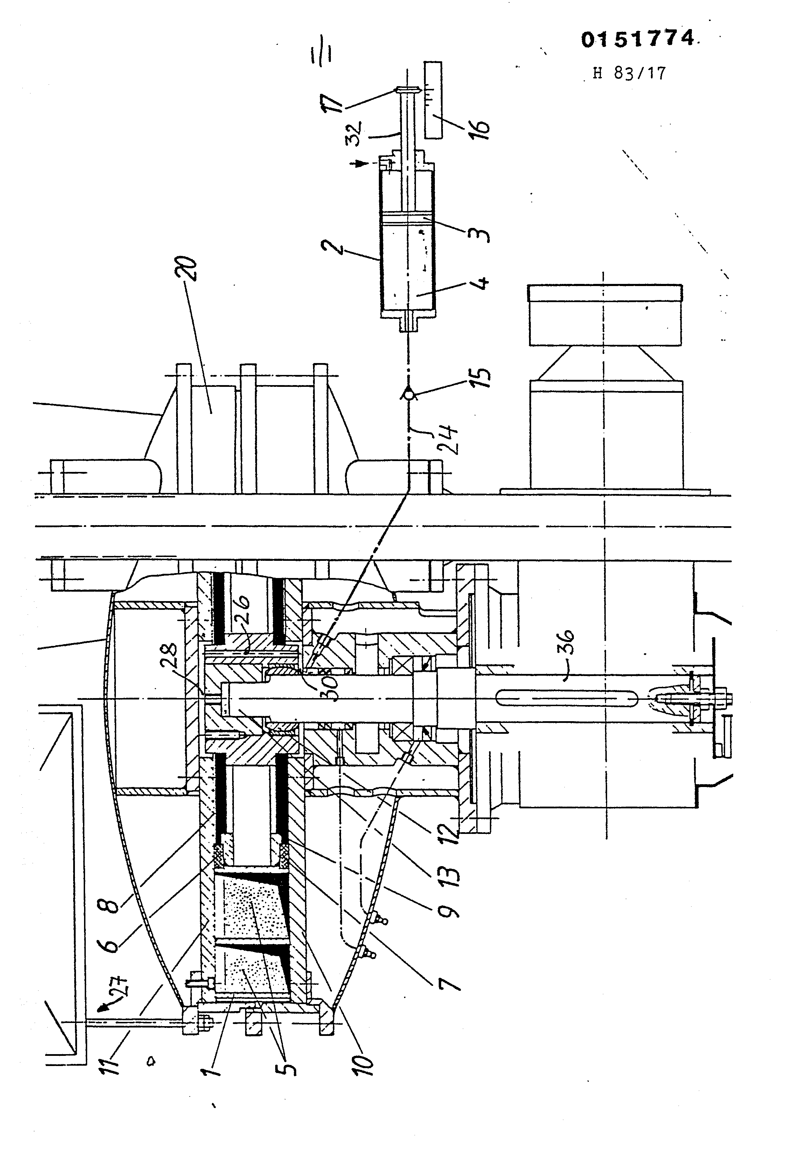

Ein Ausführungsbeispiel der erfindungsgemäßen Vorrichtung wird nachstehend unter Bezugnahme auf die Zeichnung beschrieben, die eine Seitenansicht - teilweise im Schnitt - einer Vorrichtung gemäß DE-OS 32 17 406 unter Hervorhebung der erfindungsgemäßen Merkmale wiedergibt.

An einem nichtgezeigten Gerüst ist ein Gehäuse 20 schwenkbar gelagert. Im Gehäuse 20 befinden sich zwei zueinander parallele Dichtplatten 10, 11, zwischen denen, angetrieben über eine Welle 36 ein scheibenförmiger Rotor 1 läuft, in dem zwei konzentrische Ringe von senkrecht durchgehenden Fördertaschen 5 ausgebildet sind. In Betrieb werden die Fördertaschen 5 bei sich kontinuierlich drehendem Rotor 1 an einer Beschickungsstation gefüllt und an einer dazu in Drehrichtung versetzten Entleerungsstation entleert. Hierbei wird abhängig von der Drehzahl des Rotors und der in den Fördertaschen 5 geförderten Schüttgutmasse ein Drehmoment auf die Vorrichtung ausgeübt, das mittels einer Kraftmeßvorrichtung 27 festgestellt wird.

Gemäß der Erfindung ist nun zwischen den Dichtplatten 10, 11 und der Unter- bzw. Oberseite des Rotors 1 eine hydrostatische Lagerung in Form unter Druck stehenden Schmiermittelschichten 8, 9 vorgesehen. Die Schmiermittelschichten 8, 9 werden gegenüber den Fördertaschen 5 durch ringförmige Dichtungen 6, 7 aus porösem Material abgegrenzt. Das Material ist so beschaffen, daß ständig eine geringe Schmiermittelmenge durch die Dichtungen 6, 7 hindurchdiffundiert und so ein Eindringen von Staub in das Rotorinnere verhindert.

Der hydrostatische Druck im Abdicht- und Lagerbereich des Rotors 1 wird von einer Schmiermittelzuführeinrichtung 2 hervorgerufen, die über eine Verbindungsleitung 24, vorzugsweise unter Einschaltung eines Rückschlagventils 15, mit dem Abdicht- und Lagerbereich des Rotors 1 in Verbindung steht.

Die Schmiermittelzuführeinrichtung 2 des Ausführungsbeispiels besteht aus einem Zylinder 4, in dem ein Kolben 3 unter Einwirkung eines vorzugsweise konstanten Drucks das im Zylinderinneren befindliche Schmiermittel in die Verbindungsleitung 24 drückt. Der Druck auf den Kolben wird durch Anlegen von Preßluft erzeugt, die aus einer vorhandenen Preßluftleitung, einem Kompressor oder einer Preßluftflasche geliefert wird. An die Stelle der pneumatischen Druckerzeugung könnte auch eine mechanische oder hydraulische treten. An einer aus dem Zylinder 4 herausgeführten Kolbenstange 32 ist eine Anzeigevorrichtung für die noch vorhandene Schmiermittelmenge angebracht, die beim Ausführungsbeispiel die Form eines Meßlineals 16 mit an der Kolbenstange 32 befestigtem Zeiger 17 hat.

Über geeignete Kanäle 26, 28, 30 erfolgt auch eine automatische und permanente Schmierung des Mitnahmeschafts 13 der Antriebswelle 36 sowie der kardanischen Rotorzentrierung 12.

In Betrieb wird das im Zylinder 4 befindliche Schmiermittel unter vorzugsweise konstantem, jedoch regel- bzw. einstellbarem Druck in dem Abdicht- und Lagerbereich des Rotors 1 über die Verbindungsleitung 24 gefördert. Der auf die Schmiermittelschichten 8, 9 ausgeübte hydrostatische Druck bewirkt eine mechanische Trennung des Rotors 1 von den Dichtplatten 10, 11, wodurch die Reibung zwischen diesen Elementen erheblich verringert wird.

Bei Explosionen im Förderbereich des Rotors 1, bei denen Verpuffungsdrücke bis zu 10 bar auftreten können, wird das Rückschlagventil 15 geschlossen. Hierdurch wird ein unkontrolliertes Zurückströmen des Schmiermittels in die Schmiermittelzuführeinrichtung 2 verhindert. Die durch das Schmiermittel gebildete Fettvorlage kann mit üblichen Nachschmiereinrichtungen über einen Schmiernippel noch ergänzt werden.

PATENTANWALT
DIPL.-ING. KURT KAHLER
01.51.774
RAIFFEISENSTR. 4
D-8931 WALKERTSHOFEN
TEL. 08239.341

Pfister GmbH,                                    H 83/17-KK-57
Stätzlingerstr. 70,
8900 Augsburg

## P a t e n t a n s p r ü c h e

1. Vorrichtung zum kontinuierlichen, gravimetrischen Dosieren und pneumatischen Fördern von schüttfähigem Gut, das mit einer Fördereinrichtung über eine Meßstrecke geführt wird, wobei die Fördereinrichtung als ein zwischen zwei parallelen Dichtplatten in einem Gehäuse angeordneter, mit Fördertaschen versehener Rotor ausgebildet ist, der über eine im wesentlichen vertikale Antriebswelle in Rotation versetzbar ist, dadurch g e k e n n z e i c h n e t , daß der Rotor (1) zwischen der oberen und unteren Dichtplatte (10, 11) in unter Druck stehenden Schmiermittelschichten (8, 9) hydrostatisch gelagert ist.

2. Vorrichtung nach Anspruch 1, dadurch g e k e n n - z e i c h n e t , daß über Verbindungskanäle (26, 28, 30) die kardanische Rotorzentrierung (12) und/oder der Mitnahmeschaft (13) der Antriebswelle permanent mit Schmiermittel versorgt sind.

3. Vorrichtung nach Anspruch 1 oder 2, dadurch g e - k e n n z e i c h n e t , daß die radiale Abdichtung der hydrostatisch wirkenden Lagerung gegenüber den Schüttgut führenden Fördertaschen (5) über poröse Dichtungsringe (6, 7) erfolgt, die eine geringe Schmiermittelmenge hindurchdiffundieren lassen.

4. Vorrichtung nach einem der vorhergehenden Ansprüche, dadurch g e k e n n z e i c h n e t , daß der Rotorabdicht- und -lagerbereich mit einer unter Druck stehenden Schmiermittelzuführeinrichtung (2) in Verbindung steht.

5. Vorrichtung nach Anspruch 4, dadurch g e k e n n - z e i c h n e t , daß in die zwischen der Schmiermittelzuführeinrichtung (2) und dem Abdicht- und Lagerbereich des Rotors (1) verlaufende Verbindungsleitung (24) ein Rückschlagventil (15) eingefügt ist.

6. Vorrichtung nach einem der vorhergehenden Ansprüche, dadurch g e k e n n z e i c h n e t , daß der Druck der hydrostatischen Lagerung höher ist als der in den Schüttgut fördernden Fördertaschen (5) des Rotors (1).

7. Vorrichtung nach einem der vorhergehenden Ansprüche, dadurch g e k e n n z e i c h n e t , daß die Schmiermittelzuführeinrichtung aus einem Zylinder (4) mit darin geführtem Kolben (3) gebildet ist, auf den ein konstanter Druck ausgeübt wird.

8. Vorrichtung nach Anspruch 6, dadurch g e k e n n - z e i c h n e t , daß der Kolben (3) unter einem konstanten Luftdruck, etwa von einer Preßluftleitung oder einem Kompressor steht.

9. Vorrichtung nach Anspruch 7 oder 8, dadurch g e - k e n n z e i c h n e t , daß an einer Kolbenstange (32) eine Anzeigevorrichtung (16, 17) für den Inhalt des Zylinders (4) angebracht ist.

0151774.

H 83/17